# EUROPÄISCHE PATENTSCHRIFT

(11) **EP 3 862 547 B1**
(45) Veröffentlichungstag und Bekanntmachung des Hinweises auf die Patenterteilung: **17.05.2023**
(21) Anmeldenummer: 20206128.9
(22) Anmeldetag: 06.11.2020
(51) Int. Cl.: F02C 3/22, F02C 3/30, F02C 3/34

(54) **GASTURBINENANORDNUNG UND VERFAHREN ZUM BETREIBEN EINER GASTURBINENANORDNUNG**
GAS TURBINE ARRANGEMENT AND METHOD OF OPERATING A GAS TURBINE ARRANGEMENT
AGENCEMENT DE TURBINE À GAZ ET PROCÉDÉ DE FONCTIONNEMENT D'UN AGENCEMENT DE TURBINE À GAZ

(30) Priorität: 04.02.2020 DE 102020102708
(43) Veröffentlichungstag der Anmeldung: 11.08.2021
(73) Patentinhaber: Deutsches Zentrum für Luft- und Raumfahrt e.V., 53227 Bonn-Oberkassel (DE)
(72) Erfinder: Henke, Martin, 72076 Tübingen (DE); Krummrein, Thomas, 73108 Gammelshausen (DE)
(74) Vertreter: Fleck, Julia Maria

(56) Entgegenhaltungen:
- US-A- 4 271 664
- US-A1- 2006 260 290
- US-A1- 2010 319 354

## Beschreibung

Die Erfindung betrifft eine Gasturbinenanordnung mit einer Brennkammer zur Verbrennung von Oxidator und Brennstoff zu Abgas, einer Frischgasseite mit Leitungsmitteln stromauf der Brennkammer zur Leitung von Oxidator und/oder Brennstoff an die Brennkammer und einer Abgasseite mit Leitungsmitteln stromab der Brennkammer zur Leitung von Abgas wegführend von der Brennkammer, einer auf der Frischgasseite angeordneten Verdichtereinrichtung zum Verdichten von Oxidator, einer auf der Abgasseite angeordneten Turbineneinrichtung zum Entspannen des Abgases unter Energieauskopplung, wobei die Verdichtereinrichtung und die Turbineneinrichtung mittels einer Welle mechanisch gekoppelt bzw. koppelbar sind, und mit einer Wärmepumpenanordnung, die zumindest eine von dem Abgas durchströmbare Wärmetauschereinrichtung aufweist, welche eine Wärmequelle der Wärmepumpenanordnung bildet. Die Erfindung betrifft ferner ein Verfahren zum Betreiben einer Gasturbinenanordnung.

Eine Gasturbinenanordnung dieser Art sowie ein derartiges Verfahren sind in der US 2010 / 0319 354 A1 angegeben. Bei dieser bekannten Gasturbinenanordnung ist eine Brennkammer vorgesehen, der auf einer Frischgasseite über Leitungsmittel Oxidator und Brennstoff zur Verbrennung zu Abgas zugeführt ist, welches über eine Abgasseite mit Leitungsmitteln über eine abgasseitig angeordnete Turbineneinrichtung zum Entspannen abgeführt wird. Auf der Frischgasseite ist eine Verdichtereinrichtung zum Verdichten von Oxidator angeordnet, welche mittels einer Welle mechanisch mit der Turbineneinrichtung gekoppelt ist. Stromab der Turbineneinrichtung wird das Abgas über einen Wärmetauscher geführt und ausgangsseitig des Wärmetauschers teilweise an einer Abzweigstelle zur Eingangsseite zurückgeführt, während der andere Teil des Abgases über einen weiteren Wärmetauscher und über Verdampfer von Wärmepumpen einer Trenneinrichtung zum Abtrennen von Kohlenoxid (CO₂) bei kryogenen Temperaturen zugeführt wird. Die teilweise Rückführung des Abgases zur Eingangsseite der Verdichtervorrichtung hat dabei den Zweck, die CO₂-Konzentration abgasseitig der Turbineneinrichtung zu erhöhen, wobei in dem Rückführzweig ein zusätzlicher Wärmetauscher angeordnet sein kann.

Die Druckschrift DE 10 2014 206 474 A1 zeigt ebenfalls eine Gasturbinenanordnung mit einer daran angeschlossenen Wärmepumpenanordnung. Zu einer Abgasrückführung der Gasturbinenanordnung sind keine näheren Angaben gemacht.

Auch die Druckschrift JP 2007 - 247 585 A zeigt eine Gasturbinenanordnung mit einer eingebundenen Wärmepumpenanordnung. Diese Druckschrift befasst sich in wesentlichen Teilen mit einer Anordnung zur Rückführung von in dem Abgas vorhandenem Wasser, wobei ein Sammelturm eine zentrale Einheit zum Sammeln von Wasser und Rückführen über einen Wärmetauscher zum Eingang an der Brennkammer bildet. In dieser Druckschrift sind ebenfalls keine Angaben zur Rückführung von Abgas auf die Eingangsseite der Gasturbinenanordnung gemacht.

Eine weitere Gasturbinenanordnung ist in der US 7 637 093 B2 angegeben. Dabei wird Luft zunächst von einem Eingangsdruck auf einen Arbeitsdruck verdichtet, in der Brennkammer zusammen mit Brennstoff zu Abgas umgesetzt und das entstandene Abgas in der Turbineneinrichtung unter elektrischer Energiegewinnung mittels einer über die Welle angetriebenen Generatoreinrichtung auf einen Ausgangsdruck, entsprechend dem Eingangsdruck, entspannt.

Eine weitere Gasturbinenanordnung ist aus der US 4 271 664 bekannt.

Bei derartigen Gasturbinenanordnungen, insbesondere bei Mikrogasturbinenanordnung (Leistungsbereich zwischen bspw. 1 und 500 kW, oder auch bis 1 MW), wird der Verbrennungsprozess in der Regel aus emissionstechnischen Gründen bei hohen Luftzahlen betrieben. Hierdurch ergibt sich ein geringer Partialdruck von bei dem Verbrennungsprozess entstehendem Wasser bzw. Wasserdampf im Abgas. Dies wiederum erschwert die energetische Nutzung der in dem Wasserdampf enthaltenen Kondensationswärme durch Auskondensieren des Wasserdampfes (wie bei der Brennwerttechnik bekannt).

Der Erfindung liegt die Aufgabe zugrunde, eine insbesondere hinsichtlich der Wärmenutzbarkeit verbesserte Gasturbinenanordnung bereitzustellen, sowie ein entsprechendes Verfahren zum Betreiben einer Gasturbinenanordnung.

Die Aufgabe wird für die Gasturbinenanordnung mit den Merkmalen des Anspruchs 1 und für das Verfahren mit den Merkmalen des Anspruchs 14 gelöst. Hinsichtlich der Gasturbinenanordnung ist vorgesehen, dass die Gasturbinenanordnung eine Wärmepumpenanordnung umfasst, auf welche in dem Abgas enthaltene, insbesondere thermische, Energie übertragbar ist. Dabei ist die Wärmepumpenanordnung im Betrieb insbesondere thermisch (unter Übertragung von Wärme aus dem Abgas an die Wärmepumpenanordnung) in die Gasturbinenanordnung eingekoppelt bzw. einkoppelbar. Die Wärmepumpeanordnung kann auch im Betrieb mechanisch (z. B. unter Ankopplung an die durch Abgasentspannung über die Turbineneinrichtung angetriebene Welle), und/oder elektrisch (z. B. unter Bezug von mittels der Welle und einer daran gekoppelten Generatoreinheit erzeugter elektrischer Energie) in die Gasturbinenanordnung eingekoppelt bzw. einkoppelbar sein.

Die Wärmepumpenanordnung nimmt Wärme auf einem niedrigen Temperaturniveau, hier insbesondere aus dem Abgas, auf, hebt die Temperatur unter Zufuhr hochwertiger (z. B. mechanischer oder thermischer) Energie an und gibt sie auf einem höheren Temperaturniveau an eine Wärmesenke ab. Die Wärmepumpenanordnung kann beispielsweise als Kompressionswärmepumpe ausgebildet sein und z. B. auf dem links drehenden Joule-Prozess (ohne Phasenübergang eines Wärmeträgermediums) oder Rankine-Prozess (mit Phasenübergang eines Wärmeträgermediums) basieren, oder als chemische Wärmepumpe (Absorptions- und/oder Adsorptionswärmepumpe) ausgebildet sein. Bei Ausbildung als Kompressionswärmepumpe umfasst die Wärmepumpenanordnung zwischen einer Wärmequelle und einer Wärmesenke insbesondere eine Kompressoreinrichtung und eine Expansionseinrichtung. Durch die Einkopplung der Wärmepumpenanordnung in die Gasturbinenanordnung auf deren Abgasseite ergeben sich vielfältige Optimierungsmöglichkeiten hinsichtlich der energetischen Nutzung, insbesondere der Wärmenutzung. So lassen sich Temperaturen, je nach Auslegung der Wärmepumpenanordnung, auf ein für die weitere Nutzung optimiertes Temperaturniveau anheben.

Auf der Abgasseite ist stromab der Turbineneinrichtung zumindest eine Wärmetauscheinrichtung der Wärmepumpenanordnung von dem Abgas durchströmbar angeordnet, die eine Wärmequelle der Wärmepumpenanordnung bildet. Mittels der Wärmetauscheinrichtung bzw. der Wärmequelle ist die Wärmepumpenanordnung thermisch in die Gasturbinenanordnung eingekoppelt. Mittels der Wärmetauscheinrichtung kann das Abgas vorteilhaft abgekühlt werden und dennoch ein vergleichsweise hohes Temperaturniveau zur Abwärmenutzung bereitgestellt werden. Aufgrund der geringen Temperaturen ist Wasserdampf aus dem Abgas auch bei hohen Luftzahlen innerhalb des Verbrennungsprozesses auskondensierbar. Die Wärmepumpenanordnung kann aufgrund entsprechender Temperaturen seitens der Wärmequelle und je nach Auslegung bei einem Wirkungsgradoptimum betrieben werden.

Dabei kann die Wärmetauscheinrichtung zur thermischen Einkopplung in die Gasturbinenanordnung auf der Niedertemperaturseite und/oder auf der Hochtemperaturseite der Wärmepumpenanordnung angeordnet sein. Letzteres ist insbesondere zweckmäßig, wenn, wie bei einer chemischen Wärmepumpe, die hochwertige Energie der Wärmepumpenanordnung durch thermische Energie gebildet ist. Dabei kann die bzw. eine weitere Wärmetauscheinrichtung zusätzlich (zu der auf der Niedertemperaturseite angeordneten Wärmetauscheinrichtung) oder alternativ an einer Position auf der Abgasseite mit einem höheren Temperaturniveau angeordnet sein. Die hochtemperaturseitige Wärmetauscheinrichtung kann z. B. in Reihe zu (einer) weiteren Wärmetauscheinrichtung/en (z. B. zur Verdampfung und/oder Warmwasseraufbereitung) parallel dazu oder auch anstelle dieser vorhanden sein.

Die Abgasrückführleitung zur externen Abgasrezirkulation unter Zugabe zumindest eines Anteils des Abgases auf die Frischgasseite zweigt aus der Abgasseite stromab der Turbineneinrichtung und stromab der Wärmetauscheinrichtung (insbesondere stromab aller auf der Abgasseite angeordneten Komponenten, und unmittelbar stromauf des Abgasaustritts) ab und mündet auf der Frischgasseite, insbesondere stromauf der Verdichtereinrichtung. Durch die so ermöglichte Beimischung von Abgas zu dem Oxidator im Betrieb ergeben sich vorteilhafte mögliche Betriebsweisen. Beispielsweise kann der Wassergehalt dem Abgas und damit die auskondensierbare Wassermenge innerhalb des Abgases erhöht werden.

In zweckmäßiger Weiterbildung kann die Wärmetauscheinrichtung mit einem Wärmespeicher (z. B. Niedertemperaturspeicher) der Wärmepumpenanordnung in thermische/r Wirkverbindung bringbar sein bzw. stehen, mittels dem die aus dem Abgas übertragene Wärme zur Verwendung in der Wärmepumpenanordnung zwischenspeicherbar ist. Auf diese Weise kann der Betrieb der Gasturbinenanordnung zur Erzeugung elektrischer Energie vorteilhaft zeitlich von dem Betrieb zur Wärmeerzeugung mittels der Wärmepumpenanordnung entkoppelt werden. Der Wärmespeicher kann eine separate Speichereinrichtung umfassen oder einer bereits vorhandenen Speichereinrichtung zugeordnet sein, die dann auch für den Temperaturbereich zum Betrieb der Wärmepumpenanordnung ausgebildet ist.

Zweckmäßigerweise kann die Wärmetauscheinrichtung zum Auskondensieren von Wasserdampf aus dem Abgas einen Kondensatabscheider aufweisen, der vorzugsweise zur weiteren Nutzung des Wassers, insbesondere in einem Wasserkreislauf, innerhalb der Gasturbinenanordnung, eingekoppelt ist. So kann vorteilhafterweise auch die Kondensationswärme des Wassers bzw. Wasserdampfes genutzt werden. Weiterhin kann das Wasser vorteilhaft dem Gesamtprozess, innerhalb der Gasturbinenanordnung, wieder zugeführt werden.

Kostengünstig ist Wärme nutzbar, wenn stromab der Turbineneinrichtung (und ggf. stromab einer Rekuperationseinrichtung) und stromauf der Wärmetauscheinrichtung eine zweite Wärmetauscheinrichtung, insbesondere in Ausbildung als Warmwassertauscher, angeordnet ist.

Eine besonders Effizienz steigernde Maßnahme besteht darin, dass ein Wasserkreislauf mit zumindest einer Rückführleitung vorhanden ist, mittels dem auf der Abgasseite aus dem Abgas auskondensierendes bzw. auskondensiertes Wasser auf der Frischgasseite und/oder in der Brennkammer zuführbar ist.

Eine Wirkungsgradsteigerung kann bewirkt werden, wenn das Wasser in das Frischgas bzw. in die Brennkammer an zumindest einem Zugabeort zuführbar ist, umfassend einen ersten Zugabeort stromauf der Verdichtereinrichtung, einen zweiten Zugabeort innerhalb der Verdichtereinrichtung, einen dritten Zugabeort zwischen der Verdichtereinrichtung und der Brennkammer und einen vierten Zugabeort innerhalb der Brennkammer. Je Zugabeort können auch mehrere Zugabestellen (z. B. mehrere (verteilte) Düsen) zur Zugabe vorhanden sein. Die Zugabe kann z. B. über Zerstäuberdüsen erfolgen. Mittels Zugabe am ersten Zugabeort kann durch Verdunstung des Wassers in dem Oxidator vorteilhafterweise die Oxidatortemperatur abgesenkt werden. Mittels Zugabe am zweiten Zugabeort, insbesondere zwischen Verdichterstufen, kann eine Verdichtung mit Zwischenkühlung erreicht werden. Bei Zugabe am dritten Zugabeort, insbesondere bei Vorhandensein einer Rekuperationseinrichtung stromauf desselben, erfolgt durch die so bewirkte Massenerhöhung auf der Frischgasseite eine vermehrte Abgaskühlung auf der Abgasseite. Durch Zugabe am vierten Zugabeort kann der Verbrennungsprozess verbessert werden und die Abgasmasse vorteilhaft erhöht werden. Insbesondere stromauf des dritten und/oder vierten Zugabeortes kann das Wasser verdampft werden. Ebenso ist eine Verdampfung in Zusammenhang mit dem ersten und/oder zweiten Zugabeort (stromauf derselben oder innerhalb des Oxidators) zweckmäßig.

Dabei kann zur Verdampfung bzw. Überhitzung vorteilhaft eine weitere Wärmetauscheinrichtung zur Wärmeübertragung zwischen dem Abgas und dem Wasserkreislauf vorhanden sein. Die weitere Wärmetauscheinrichtung kann abgasseitig zwischen der Rekuperationseinrichtung und der Wärmetauscheinrichtung der Wärmepumpenanordnung (bzw. ggf. der zweiten Wärmetauscheinrichtung) angeordnet sein.

Zur Wirkungsgradsteigerung ist ebenfalls zweckmäßig, wenn stromab der Turbineneinrichtung, insbesondere ohne Zwischenschaltung einer weiteren Komponente (d. h. einer innerhalb der Leitungsmittel angeordneten funktionalen Einheit), eine Rekuperationseinrichtung angeordnet ist. Mittels der Rekuperationseinrichtung ist Wärme von der Abgasseite auf die Frischgasseite übertragbar.

Einer höheren Wasserrückgewinnungsmenge ist es zuträglich, wenn auf der Abgasseite stromab der Wärmetauscheinrichtung der Wärmepumpenanordnung eine weitere Turbineneinrichtung angeordnet ist. In diesem Falle wird in der ersten Turbineneinrichtung, unmittelbar (das heißt ohne Zwischenschaltung einer weiteren Komponente) stromab der Brennkammer der Druck von dem Arbeitsdruck lediglich auf einen Zwischendruck entspannt, der oberhalb des Ausgangsdruckes (bzw. Eingangsdruckes) liegt. Die vollständige Entspannung im Wesentlichen auf den Ausgangsdruck (abgesehen von zu überwindenden Druckverlusten) erfolgt innerhalb der weiteren Turbineneinrichtung. Zwar reduziert sich bei der Entspannung auf den Ausgangsdruck neben der Temperatur auch der Partialdruck des Wasserdampfes, was isoliert betrachtet der Auskondensierbarkeit des Wassers entgegensteht. Untersuchungen der Erfinder haben jedoch gezeigt, dass der Effekt der Druckreduktion überkompensiert wird durch die Temperaturreduktion. So ist in Summe durch diese Maßnahme vorteilhaft weiteres Wasser auskondensierbar.

Zur weiteren Wasserrückgewinnung zur energetischen und/oder stofflichen Nutzung des Wassers ist bevorzugt auf der Abgasseite stromab der Wärmetauscheinrichtung, z. B. stromab der weiteren Turbineneinrichtung, ein Wasserabscheider angeordnet.

Eine weitere Wirkungsgradsteigerung der Gasturbinenanordnung durch zusätzliche Auskondensierbarkeit von Wasser ist erreichbar, wenn auf der Abgasseite stromab der Wärmetauscheinrichtung der Wärmepumpenanordnung eine Kühleinrichtung angeordnet ist, wobei das Abgas (auf der Abgasseite) insbesondere mittels durch die Abgasrückführleitung zurückgeführtem Abgas und/oder in dem Wasserkreislauf geführtem Wasser kühlbar ist bzw. gekühlt ist. Zu diesem Zweck weist die Kühleinrichtung insbesondere eine Wärmetauscheinrichtung auf, die im Betrieb einen thermischen Kontakt zwischen dem auf der Abgasseite strömenden Abgas und dem Abgas in der Abgasrückführleitung und/oder dem Wasser in der Wasserrückführleitung bewirkt. Untersuchungen der Erfinder haben gezeigt, dass eine Anordnung des Kühlers stromauf der weiteren Turbineneinrichtung zweckmäßig ist.

Zusätzlich zu der thermischen Einkopplung der Wärmepumpenanordnung in die Gasturbinenanordnung kann die mechanische Einkopplung vorteilhaft derart ausgebildet sein, dass eine Kompressoreinrichtung der Wärmepumpenanordnung mit der Welle zur Übertragung mechanischer Energie von der Turbineneinrichtung gekoppelt ist. Auf diese Weise kann vorteilhaft zumindest ein Teil der durch das Abgas erzeugten mechanischen Energie ohne Umwandlung in elektrische Energie zumindest teilweise bzw. zeitweise zum Antrieb der Wärmepumpenanordnung verwendet werden. Vorteilhafte Ausführungsvarianten des Verfahrens sind in Zusammenhang mit den Ausbildungsvarianten der Gasturbinenanordnung vorstehend beschrieben. Nachfolgend wird die Erfindung anhand von Ausführungsbeispielen unter Bezugnahme auf die Zeichnung näher erläutert. Es zeigt:

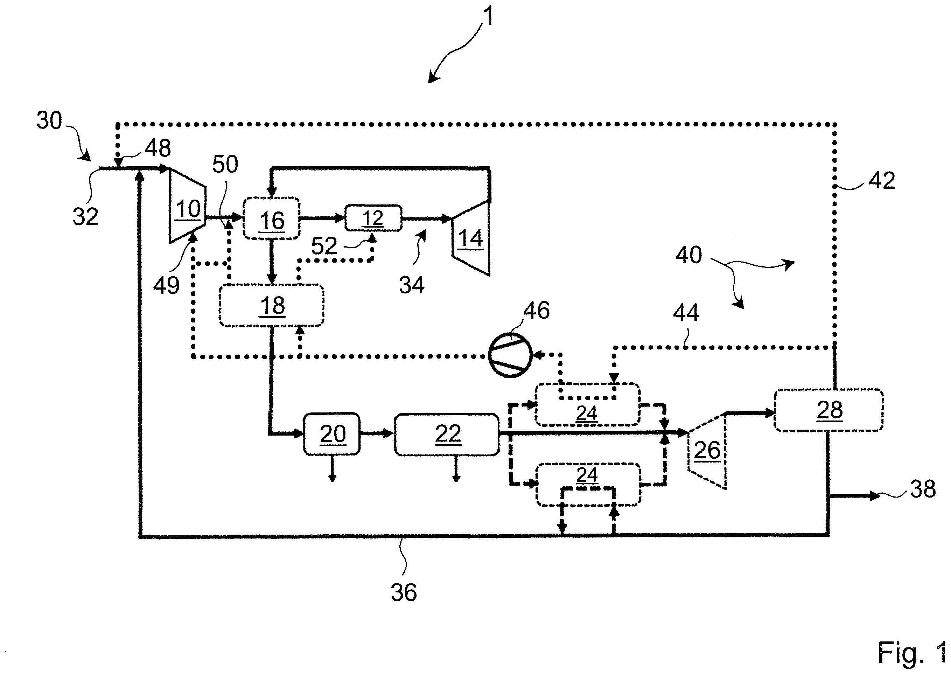

- Fig. 1: ein Fließschema einer erfindungsgemäßen Gasturbinenanordnung mit einer auf einer Abgasseite angeordneten Wärmetauscheinrichtung einer Wärmepumpenanordnung.

Fig. 1 zeigt eine Gasturbinenanordnung 1, wie sie insbesondere zur Strom- und/oder Wärmeerzeugung, auch dezentral, einsetzbar ist. Der Einsatz betrifft z. B. Kraft-Wärme-Kopplungs-Anwendungen in einem Fernwärmenetz und/oder eine Versorgung dezentraler energetischer Einheiten wie beispielsweise Krankenhäuser, Hallenbäder, Bürogebäude oder Wohnviertel oder dergleichen. Der Leistungsbereich der Gasturbinenanordnung liegt beispielsweise zwischen 1 kW und 500 kW oder auch bis zu 1 MW.

Optionale Komponenten der Gasturbinenanordnung 1 sind, bis auf eine zweite Wärmetauscheinrichtung 20 und eine Pumpeinrichtung 46, die ebenfalls optional vorhanden sind, in gestrichelten Linien dargestellt. Ein Wasserkreislauf 40 mit einer ersten und/oder einer zweiten Rückführleitung 42, 44 (gepunktete Linien) sind ebenfalls optional vorhanden.

Die Gasturbinenanordnung 1 umfasst zumindest eine Brennkammer 12 zur Verbrennung von Oxidator und Brennstoff als Frischgase unter Erzeugung von Abgas. Der Oxidator wird in der Regel durch Luft gebildet und kann weitere Komponenten, insbesondere extern rezirkuliertes Abgas, enthalten. Als Brennstoffe kommen beispielsweise (gasförmige und/oder flüssige) Kohlenwasserstoffe, z. B. Erdgas, sowie z. B. Wasserstoff oder so genannte Synthesegase mit einem beträchtlichen Wasserstoffanteil (z. B. größer 10 vol.%) und/oder Stickstoffanteil (z. B. größer 20 vol.%) zum Einsatz.

Die Zugabe des Oxidators erfolgt mittels einer Frischgasseite 30 mit einem Oxidatoreintritt 32 und Leitungsmitteln zur Leitung des Oxidators (und gegebenenfalls weiteren Bestandteile) an die Brennkammer 12. Die Abfuhr des erzeugten Abgases, wegführend von der Brennkammer 12, erfolgt mittels Leitungsmitteln einer Abgasseite 34 der Gasturbinenanordnung 1. Die Abgasseite 34 mündet in einem Abgasaustritt 38 zur Abgabe des Abgases an die Umgebung.

Die Gasturbinenanordnung 1 weist eine Verdichtereinrichtung 10 zur Verdichtung von Gasen auf, die auf der Frischgasseite 30 angeordnet ist und zur Verdichtung des Oxidators dient.

Auf der Abgasseite, stromab der Brennkammer 12 (insbesondere ohne Zwischenschaltung weiterer Komponenten) weist die Gasturbinenanordnung 1 eine Turbineneinrichtung 14 zur Entspannung des Abgases unter Energieumwandlung in mechanische Energie auf, wobei im Betrieb eine Welle der Gasturbinenanordnung 1 angetrieben wird. Zur Auskopplung elektrischer Energie steht eine (hier nicht gezeigte) Generatoreinrichtung mit der Welle in Wirkverbindung.

Zur Wirkungsgradsteigerung ist auf der Abgasseite 34 stromab der Turbineneinrichtung 14 bzw. auf der Frischgasseite 30 zwischen der Verdichtereinrichtung 10 und der Brennkammer 12 eine Rekuperationseinrichtung 16 angeordnet, mittels welcher Wärmeenergie aus dem Abgas auf den Oxidator übertragbar ist.

Erfindungsgemäß weist die Gasturbinenanordnung 1 eine (hier nicht näher gezeigte) Wärmepumpenanordnung auf, auf die in dem Abgas enthaltene Energie übertragbar ist. Die Wärmepumpenanordnung kann beispielsweise auf dem links drehenden Joule-Prozess (ohne Phasenübergang eines Wärmeträgermediums) oder Rankine-Prozess (mit Phasenübergang eines Wärmeträgermediums) basieren oder als chemische Wärmepumpe (Absorptions- und/oder Adsorptionswärmepumpe) ausgebildet sein.

Die Wärmepumpenanordnung ist insbesondere thermisch auf der Abgasseite 34 eingekoppelt. Hierzu ist eine Wärmetauscheinrichtung 22 auf der Abgasseite 34 stromab der Rekuperationseinrichtung 16 angeordnet, die als Wärmequelle der Wärmepumpenanordnung dient. Die Wärmepumpenanordnung umfasst neben der Wärmequelle vorzugsweise eine Wärmesenke, wobei das gegenüber der Wärmequelle angehobene Temperaturniveau z. B. zu Heizzwecken und/oder für technische Prozesse nutzbar ist. Zwischen der Wärmequelle und der Wärmesenke der Wärmepumpenanordnung ist vorzugsweise eine Kompressoreinrichtung angeordnet, während zwischen der Wärmesenke und der Wärmequelle eine Expansionseinrichtung angeordnet ist (hier nicht gezeigt).

Zusätzlich zu der thermischen Einkopplung der Wärmepumpenanordnung in die Gasturbinenanordnung 1 kann die Wärmepumpenanordnung mechanisch eingekoppelt sein. Dabei wird im Betrieb ein Teil der Wellenarbeit der Welle zwischen der Verdichtereinrichtung 10 und der Turbineneinrichtung 14 zum Antrieb der Kompressoreinrichtung der Wärmepumpenanordnung verwendet.

Ein ausreichend hohes Temperaturniveau des Abgases (wobei "ausreichend" abhängig vom Anwendungsfall ist) kann kostengünstig mittels einer zweiten Wärmetauscheinrichtung 20 genutzt werden, die stromauf der Wärmetauscheinrichtung 22 angeordnet ist. Die zweite Wärmetauscheinrichtung 20 kann beispielsweise als Warmwassertauscher zur Warmwassererzeugung ausgebildet sein.

Die Gasturbinenanordnung 1 ist zum Betrieb mit externer Abgasrezirkulation ausgebildet. Dazu ist auf der Abgasseite 34 eine Abgasrückführleitung 36 vorhanden, mittels der zumindest ein Teil des Abgases dem Oxidator auf der Frischgasseite 30 zugegeben werden kann. Die Zugabe erfolgt stromauf der Verdichtereinrichtung 10. Auf diese Weise steigt im Betrieb der Wasseranteil im Abgas der Gasturbinenanordnung 1 an, so dass die Auskondensierbarkeit des Wasserdampfes aus dem Abgas verbessert wird, was der Gesamteffizienz der Gasturbinenanordnung 1 zuträglich ist.

Zum Auskondensieren des Wasserdampfes aus dem Abgas unter energetischer Nutzung und/oder zur anderweitigen Nutzung des dort verfügbaren Temperaturniveaus für angrenzende Prozesse ist die Wärmetauscheinrichtung 22 und/oder gegebenenfalls weitere vorhandene Wärmetauscheinrichtungen stromauf oder stromab der Wärmetauschereinrichtung 22, wie die zweite Wärmetauscheinrichtung 20, mit einem Kondensatabscheider zur Abscheidung von Wasser ausgestattet. An geeigneter Stelle können auf der Abgasseite weitere Kondensat- bzw. Wasserabscheider vorhanden sein, z. B. ein Wasserabscheider 28 stromab einer Kühleinrichtung 24 bzw. einer weiteren Turbineneinrichtung 26.

Äußerst vorteilhaft auf den Wirkungsgrad der Gasturbinenanordnung 1 wirkt es sich aus, wenn das aus dem Abgas auskondensierte Wasser innerhalb des Gesamtprozesses, insbesondere stromauf der Turbineneinrichtung 14, wieder zuführbar und so innerhalb der Gasturbinenanordnung 1 nutzbar ist.

Zu diesem Zweck weist die Gasturbinenanordnung 1 den Wasserkreislauf 40 zur Rückführung und Wiederzugabe des Wassers stromauf der Turbineneinrichtung 14 auf, mittels dem das auskondensierte Wasser auf der Frischgasseite 30 dem Oxidator und/oder während der Verbrennung innerhalb der Brennkammer 12 zugeführt werden kann. Hierzu kann die Zugabe an unterschiedlichen Orten (an einem oder an mehreren dieser unterschiedlichen Orte) erfolgen. Mittels der ersten Rückführleitung 42 kann beispielsweise das Wasser an einem ersten Zugabeort 48, stromauf der Verdichtereinrichtung 10, zugegeben werden. Durch die Verdunstung des Wassers in dem Oxidator kann die Oxidatortemperatur abgesenkt und so der Wirkungsgrad der Gasturbinenanordnung erhöht werden. Alternativ oder zusätzlich kann mittels der zweiten Rückführleitung 44 das Wasser an einem zweiten Zugabeort 49, innerhalb der Verdichtereinrichtung 10, zugegeben werden, die beispielsweise mehrstufig, z. B. zweistufig, ausgebildet ist. Die Zugabe erfolgt zwischen den Verdichterstufen, so dass eine Verdichtung mit Zwischenkühlung mit entsprechender Wirkungsgradsteigerung erreicht wird. Alternativ oder zusätzlich kann Wasser an einem dritten Zugabeort 50, zwischen der Verdichtereinrichtung 10 und der Brennkammer 12 bzw. zwischen der Verdichtereinrichtung 10 und der Rekuperationseinrichtung 16, zugegeben werden. Insbesondere bei Vorhandensein der Rekuperationseinrichtung 16 erfolgt durch die so bewirkte Massenerhöhung auf der Frischgasseite 30 eine vermehrte Abgaskühlung auf der Abgasseite 34, was ebenfalls dem Wirkungsgrad zuträglich ist. Alternativ oder zusätzlich kann das vorzugsweise zuvor verdampfte Wasser über einen vierten Zugabeort 52, innerhalb der Brennkammer 12, zugegeben werden, wodurch der Verbrennungsprozess verbessert werden und die Abgasmasse vorteilhaft erhöht werden kann. Bei Zugabe des Wassers über die Zugabeorte 49, 50 und/oder 52 ist innerhalb des Wasserkreislaufs 40 die Pumpeinrichtung 46 vorhanden, um das Wasser auf den erforderlichen Arbeitsdruck zu bringen.

Insbesondere bei Vorhandensein des Wasserkreislaufs 40 und Zugabe über die Zugabeorte 50 und/oder 52 ist vorzugsweise stromab der Rekuperationseinrichtung 16 (und stromauf der Wärmetauscheinrichtung 20 bzw. 22) eine weitere Wärmetauscheinrichtung 18 vorhanden, die als Verdampfer bzw. Überhitzer zur Verdampfung bzw. Überhitzung des Wassers in dem Wasserkreislauf 40 ausgebildet ist. Entsprechend ist die Wärmetauscheinrichtung 18 einerseits auf der Abgasseite 34 und andererseits in dem Wasserkreislauf 40 eingekoppelt, zum thermischen Kontakt zwischen dem Abgas und dem rückgeführten Wasser.

Um die auskondensierte und/oder rückgeführte Wassermenge zur Wirkungsgradsteigerung zu erhöhen, können stromab der Wärmetauscheinrichtung 22 weitere Komponenten vorhanden sein. Zum einen kann eine weitere Turbineneinrichtung 26 angeordnet sein, um den Druck des Abgases weiter zu reduzieren. Dies geht mit einer Temperaturabsenkung innerhalb des Abgases einher, und zwar in dem Maße, dass mittels des stromab der weiteren Turbineneinrichtung 26 vorhandenen Wasserabscheiders 28 weiteres Wasser aus dem Abgas abscheidbar ist.

Eine weitere Maßnahme zur Absenkung der Abgastemperatur, um Wasser auszukondensieren und vorteilhafterweise innerhalb der Gasturbinenanordnung 1 zurückführen zu können, besteht in dem Vorhandensein der Kühleinrichtung 24. Die Kühleinrichtung 24 ist so ausgebildet, dass sie das Abgas stromab der Wärmetauscheinrichtung 22 mit dem Abgas in der Abgasrückführleitung 36 in thermischen Kontakt bringt. Dies ist insbesondere im Zusammenhang mit der weiteren Turbineneinrichtung 26 bzw. dem Wasserabscheider 28 zweckmäßig, wobei das Abgas innerhalb der Abgasrückführleitung 36 eine geringere Temperatur aufweist als stromab der Wärmetauscheinrichtung 22 bzw. zum Eintritt in die Kühleinrichtung 24. Alternativ oder zusätzlich ist die Kühleinrichtung 24 derart ausgebildet, dass das abgasseitig die Kühleinrichtung 24 durchströmende Abgas mittels des rückgeführten Wassers innerhalb des Wasserkreislaufs 40 gekühlt wird. Die Kühleinrichtung 24 ist dabei seitens des Wasserkreislaufs 40 stromauf oder stromab der gegebenenfalls vorhandenen Pumpeinrichtung 46 angeordnet.

Im Betrieb wird Oxidator über den Oxidatoreintritt 32 der Frischgasseite 30 zugeführt und zunächst mittels der Verdichtereinrichtung 10 von einem Eingangsdruck, z. B. entsprechend dem Umgebungsdruck, auf einen Arbeitsdruck von beispielsweise zwischen 2 bar und 8 bar verdichtet. Dem Oxidator kann stromauf der Rekuperationseinrichtung 16 Wasser über zumindest einen der Zugabeorte 48, 49 oder 50 zugeführt werden, vorzugsweise mittels des Wasserkreislaufs 40. Über die Rekuperationseinrichtung 16 wird der Oxidator vor Eintritt in die Brennkammer 12 durch auf der Abgasseite 34 stromab der Turbineneinrichtung 14 strömendes Abgas erwärmt, z. B. auf ein Temperaturniveau zwischen 500 °C und 800 °C.

Der erwärmte Oxidator wird, zusammen mit Brennstoff, der Brennkammer 12 zugeführt und unter Abgaserzeugung verbrannt. Zusätzlich oder alternativ zu dem stromauf der Brennkammer 12 zugegebenen Wasser kann Wasser innerhalb der Brennkammer 12 zugegeben werden, um den Verbrennungsprozess positiv zu beeinflussen und/oder die Abgasmasse zu erhöhen.

Das erzeugte Abgas wird bei Vorhandensein der weiteren Turbineneinrichtung 26 stromab der Wärmetauscheinrichtung 22 auf einen Zwischendruck oberhalb des Eingangsdrucks entspannt. Die Entspannung auf im Wesentlichen den Ausgangsdruck (bzw. Eingangsdruck) erfolgt stromab, in der weiteren Turbineneinrichtung 26. "Im Wesentlichen" bedeutet, dass der Druck zur Überwindung der Druckverluste der nachfolgenden Komponenten erhöht ist. Die Differenz zwischen dem Zwischendruck und dem Ausgangsdruck kann beispielsweise zwischen einem Zwanzigstel und einem Viertel oder einem Fünftel der Druckdifferenz zwischen dem Arbeitsdruck und dem Ausgangsdruck betragen. Ohne die weitere Turbineneinrichtung 26 wird das erzeugte Abgas über die Turbineneinrichtung 14 z. B. auf den Ausgangsdruck entspannt.

Bei der Entspannung wird die in dem Abgas enthaltene Druckenergie zunächst in Bewegungsenergie zum Antrieb der Welle umgewandelt. Die Welle wiederum treibt zum einen die Verdichtereinrichtung 10 an, zum anderen optional zumindest teilweise und/oder zeitweise die Verdichtereinrichtung 10 der Wärmepumpenanordnung. Die nicht benötigte mechanische Energie wird über die (hier nicht gezeigte) Generatoreinrichtung in elektrische Energie umgewandelt und zur weiteren Verwendung ausgekoppelt, insbesondere in ein elektrisches Netz.

Das entspannte Abgas strömt abgasseitig weiter durch die Rekuperationseinrichtung 16, wo es das Frischgas erwärmt und selbst auf eine Temperatur von z. B. zwischen 200 °C und 300 °C abgekühlt wird. Bei Vorhandensein des Wasserkreislaufs 40 mit der Notwendigkeit der Verdampfung bzw. Überhitzung von Wasser durchströmt das Abgas anschließend die weitere Wärmetauscheinrichtung 18, wobei es weiter abgekühlt wird. Anschließend durchströmt das Abgas die zweite Wärmetauscheinrichtung 20 zur Erwärmung von Warmwasser. Stromab der zweiten Wärmetauscheinrichtung 20 weist das Abgas eine Temperatur von beispielsweise zwischen 90 °C und 30 °C auf. Das Temperaturniveau am Eintritt der Wärmetauscheinrichtung 22 kann durch Komponentenauslegungen z. B. auf eine Optimierung des Wärmepumpenbetriebs abgestimmt werden. Mit dieser Temperatur tritt das Abgas in die Wärmetauscheinrichtung 22 der Wärmepumpenanordnung ein. Dort überträgt das Abgas Wärme an ein Arbeitsmedium der Wärmepumpenanordnung, wobei die Temperatur beispielsweise um weitere 10 K bis 70 K reduziert wird. Vorzugsweise wird dabei Wasser auskondensiert und über den Kondensatabscheider dem Wasserkreislauf 40 zur Wassernutzung zugeführt.

Stromab der Wärmetauscheinrichtung 22 durchströmt das Abgas optional die Kühleinrichtung 24 und erwärmt dabei in der Abgasrückführleitung 36 rezirkuliertes Abgas bzw. in dem Wasserkreislauf 40 zurückgeführtes Wasser. Dabei sinkt die Abgastemperatur weiter ab, wodurch weiteres Wasser auskondensiert und dem Wasserkreislauf 40 zugeführt werden kann.

Bei Vorhandensein der Turbineneinrichtung 26 wird das Abgas anschließend vollständig auf den Ausgangsdruck entspannt, wobei es weiter abgekühlt. In dem Wasserabscheider 28 kann so weiteres Wasser abgeschieden und dem Wasserkreislauf 40 zugeführt werden. Stromab des Wasserabscheiders 28 tritt z. B. ein Teil des Abgases über den Abgasaustritt 38 in die Umgebung aus. Der andere Teil des Abgases wird über die Abgasrückführleitung 36 dem Oxidator zugeführt. Der Anteil an rezirkuliertem Abgas zur Gesamtabgasmenge stromauf des Abgasaustritts 38 beträgt im laufenden Betrieb typischerweise zwischen 0 % und 90 %, z. B. zwischen 0% und 75%. Der Anteil kann z. B. je nach Betriebspunkt oder Betriebsphase, beispielsweise einem Anfahren der Anlage, mittels einer (hier nicht gezeigten) Steuereinrichtung angepasst werden.

Insbesondere die Kombination der eingekoppelten Wärmepumpenanordnung mit den Maßnahmen zur Wasserrückgewinnung aus dem Abgas und/oder eine das Wasser nutzende Wasserzugabe an den Zugabeorten 48, 49, 50 und/oder 52 kann eine Steigerung der Gesamtleistung bzw. des Gesamtwirkungsgrades der Gasturbinenanordnung 1 bewirken. Denn zum einen kann so die Nutzung der Kondensationswärme gesteigert werden und zum anderen die Wassermenge zur Anwendung mit Wasser- bzw. Dampfeindüsung erhöht werden. Die geringeren Abgastemperaturen des dem Oxidator bei der Abgasrezirkulation zugeführt Abgases wirken sich günstig auf den elektrischen Wirkungsgrad aus. Insbesondere die Kombination der zur Kühlung auf der Abgasseite 34 eingebrachten Komponenten wie hier dargestellt, umfassend insbesondere auch die Kühleinrichtung 24, die Turbineneinrichtung 26 und den Wasserabscheider 28 sowie die Abgasrückführleitung 36 und den Wasserkreislauf 40, kann vorteilhafterweise dazu führen, dass eine zusätzliche Wasserzufuhr von außen deutlich reduziert oder auf eine solche gänzlich verzichtet werden kann.

## Patentansprüche

1. Gasturbinenanordnung (1) mit
einer Brennkammer (12) zur Verbrennung von Oxidator und Brennstoff zu Abgas,
einer Frischgasseite (30) mit Leitungsmitteln stromauf der Brennkammer (12) zur Leitung von Oxidator und/oder Brennstoff an die Brennkammer (12) und einer Abgasseite (34) mit Leitungsmitteln stromab der Brennkammer (12) zur Leitung von Abgas wegführend von der Brennkammer (12),
einer auf der Frischgasseite (30) angeordneten Verdichtereinrichtung (10) zum Verdichten von Oxidator,
einer auf der Abgasseite (34) angeordneten, mittels einer Welle mechanisch an die Verdichtereinrichtung (10) gekoppelten bzw. koppelbaren Turbineneinrichtung (14) zum Entspannen des Abgases unter Energieauskopplung,
einer Wärmepumpenanordnung, auf welche in dem Abgas enthaltene Energie übertragbar ist, wobei auf der Abgasseite (34) stromab der Turbineneinrichtung (14) zumindest eine Wärmetauscheinrichtung (22) der Wärmepumpenanordnung von dem Abgas durchströmbar angeordnet ist, die eine Wärmequelle der Wärmepumpenanordnung bildet,
und mit einer Abgasrückführleitung (36) zur externen Abgasrezirkulation unter Zugabe zumindest eines Anteils des Abgases auf die Frischgasseite (30), die aus der Abgasseite (34) stromab der Turbineneinrichtung (14) abzweigt und auf der Frischgasseite (30), stromauf der Verdichtereinrichtung (10) mündet,
**dadurch gekennzeichnet,**
**dass** die Abgasrückführleitung (36) stromab der Wärmetauschereinrichtung (22) der Wärmepumpenanordnung abzweigt.

2. Gasturbinenanordnung (1) nach Anspruch 1,
**dadurch gekennzeichnet,**
**dass** die Wärmetauscheinrichtung (22) mit einem Wärmespeicher der Wärmepumpenanordnung in Wirkverbindung bringbar ist bzw. steht, mittels dem die aus dem Abgas übertragene Wärme zur Verwendung in der Wärmepumpenanordnung zwischenspeicherbar ist.

3. Gasturbinenanordnung (1) nach Anspruch 1 oder 2,
**dadurch gekennzeichnet,**
**dass** die Wärmetauscheinrichtung (22) zur thermischen Einkopplung in die Gasturbinenanordnung auf der Niedertemperaturseite und/oder auf der Hochtemperaturseite der Wärmepumpenanordnung angeordnet ist.

4. Gasturbinenanordnung (1) nach einem der vorhergehenden Ansprüche,
**dadurch gekennzeichnet,**
**dass** die Wärmetauscheinrichtung (22) zum Auskondensieren von Wasserdampf aus dem Abgas einen Kondensatabscheider aufweist, der vorzugsweise zur weiteren Nutzung des Wassers innerhalb der Gasturbinenanordnung (1) eingekoppelt ist.

5. Gasturbinenanordnung (1) nach einem der vorhergehenden Ansprüche,
**dadurch gekennzeichnet,**
**dass** stromab der Turbineneinrichtung (14) und stromauf der Wärmetauscheinrichtung (22) eine zweite Wärmetauscheinrichtung (20), insbesondere in Ausbildung als Warmwassertauscher, angeordnet ist.

6. Gasturbinenanordnung (1) nach einem der vorhergehenden Ansprüche,
**dadurch gekennzeichnet,**
**dass** ein Wasserkreislauf (40) mit zumindest einer Rückführleitung (42, 44) vorhanden ist, mittels dem auf der Abgasseite (34) aus dem Abgas auskondensierendes Wasser stromauf der Turbineneinrichtung (14), insbesondere auf der Frischgasseite (30) und/oder in der Brennkammer (12), zuführbar ist.

7. Gasturbinenanordnung (1) nach Anspruch 6,
**dadurch gekennzeichnet,**
**dass** das Wasser an zumindest einem Zugabeort (48, 49, 50, 52) zuführbar ist, umfassend einen ersten Zugabeort (48) stromauf der Verdichtereinrichtung (10), einen zweiten Zugabeort (49) innerhalb der Verdichtereinrichtung (10), einen dritten Zugabeort (50) zwischen der Verdichtereinrichtung (10) und der Brennkammer (12) und einen vierten Zugabeort (52) innerhalb der Brennkammer (12).

8. Gasturbinenanordnung (1) nach Anspruch 7,
**dadurch gekennzeichnet,**
**dass** eine weitere Wärmetauscheinrichtung (18) zur Wärmeübertragung zwischen dem Abgas und dem Wasserkreislauf (40) zur Verdampfung bzw. Überhitzung von Wasser vorhanden ist.

9. Gasturbinenanordnung (1) nach einem der vorhergehenden Ansprüche,
**dadurch gekennzeichnet,**
**dass** stromab der Turbineneinrichtung (14), insbesondere ohne Zwischenschaltung einer weiteren Komponente, eine Rekuperationseinrichtung (16) angeordnet ist.

10. Gasturbinenanordnung (1) nach einem der vorhergehenden Ansprüche,
**dadurch gekennzeichnet,**
**dass** auf der Abgasseite (34) stromab der Wärmetauscheinrichtung (22) der Wärmepumpenanordnung eine weitere Turbineneinrichtung (26) angeordnet ist.

11. Gasturbinenanordnung (1) nach einem der vorhergehenden Ansprüche, insbesondere nach Anspruch 10,
**dadurch gekennzeichnet,**
**dass** auf der Abgasseite (34) stromab der Wärmetauscheinrichtung (22), z. B. stromab der weiteren Turbineneinrichtung (26), ein Wasserabscheider (28) angeordnet ist.

12. Gasturbinenanordnung (1) nach einem der vorhergehenden Ansprüche,
**dadurch gekennzeichnet,**
**dass** auf der Abgasseite (34) stromab der Wärmetauscheinrichtung (22) der Wärmepumpenanordnung eine Kühleinrichtung (24) angeordnet ist, wobei das Abgas insbesondere mittels durch die Abgasrückführleitung (36) zurückgeführtem Abgas und/oder in dem Wasserkreislauf (40) geführtem Wasser kühlbar ist bzw. gekühlt ist.

13. Gasturbinenanordnung (1) nach einem der vorhergehenden Ansprüche,
**dadurch gekennzeichnet,**
**dass** eine Kompressoreinrichtung der Wärmepumpenanordnung mit der Welle zur Übertragung mechanischer Energie von der Turbineneinrichtung (26) gekoppelt ist.

14. Verfahren zum Betreiben einer Gasturbinenanordnung (1) nach einem der vorhergehenden Ansprüche, bei dem der Brennkammer (12) von der Frischgasseite (30) Oxidator und Brennstoff zur Verbrennung unter Abgaserzeugung zugeführt wird, wobei Oxidator und/oder Abgas in der Verdichtereinrichtung (10) verdichtet werden, und auf der Abgasseite (34) Abgas über die Turbineneinrichtung (14) unter Energieauskopplung entspannt wird,
**dadurch gekennzeichnet,**
**dass** innerhalb der Gasturbinenanordnung (1) in dem Abgas enthaltene Energie auf die Wärmepumpenanordnung übertragen wird.

## Claims

1. A gas turbine arrangement (1) comprising
a combustion chamber (12) for combustion of oxidizer and fuel to form exhaust gas,
a fresh gas side (30) with conduit means upstream of the combustion chamber (12) for conduit of oxidizer and/or fuel to the combustion chamber (12) and an exhaust gas side (34) having conduit means downstream of the combustion chamber (12) for conduit of exhaust gas leading away from the combustion chamber (12),
a compressor device (10) arranged on the fresh gas side (30) for compressing oxidizer,
a turbine device (14), which is arranged on the exhaust gas side (34) and is mechanically coupled to the compressor device (10) by means of a shaft, for expanding the exhaust gas with decoupling of energy,
a heat pump arrangement, to which energy contained in the exhaust gas can be transferred, wherein the exhaust gas can flow through at least one heat exchange device (22) of the heat pump arrangement on the exhaust gas side (34) downstream of the turbine device (14), which heat exchange device forms a heat source of the heat pump arrangement,
and comprising an exhaust gas recirculation line (36) for external exhaust gas recirculation with the addition of at least a portion of the exhaust gas to the fresh gas side (30), which branches off from the exhaust gas side (34) downstream of the turbine device (14) and opens on the fresh gas side (30), upstream of the compressor device (10),
**characterized in that**
the exhaust gas recirculation line (36) branches off downstream of the heat exchange device (22) of the heat pump arrangement.

2. The gas turbine arrangement (1) according to claim 1,
**characterized in that**
the heat exchange device (22) can be brought into operative connection with a heat accumulator of the heat pump arrangement, by means of which the heat transferred from the exhaust gas can be temporarily stored for use in the heat pump arrangement.

3. The gas turbine arrangement (1) according to claim 1 or 2,
**characterized in that**
the heat exchange device (22) for thermal coupling into the gas turbine arrangement is arranged on the low-temperature side and/or on the high-temperature side of the heat pump arrangement.

4. The gas turbine arrangement (1) according to one of the preceding claims,
**characterized in that**
the heat exchange device (22) has a condensate separator for condensing water vapor out of the exhaust gas, which condensate separator, for further use of the water, is preferably coupled within the gas turbine arrangement (1).

5. The gas turbine arrangement (1) according to one of the preceding claims,
**characterized in that**
a second heat exchange device (20), in particular in the form of a hot water exchanger, is arranged downstream of the turbine device (14) and upstream of the heat exchange device (22).

6. The gas turbine arrangement (1) according to one of the preceding claims,
**characterized in that**
a water circuit (40) is present with at least one recirculation line (42, 44), by means of which water that has condensed out of the exhaust gas on the exhaust gas side (34), can be fed upstream of the turbine device (14), in particular to the fresh gas side (30) and/or in the combustion chamber (12).

7. The gas turbine arrangement (1) according to claim 6,
**characterized in that**
the water can be fed at at least one addition site (48, 49, 50, 52), comprising a first addition site (48) upstream of the compressor device (10), a second addition site (49) within the compressor device (10), a third addition site (50) between the compressor device (10) and the combustion chamber (12) and a fourth addition site (52) within the combustion chamber (12).

8. The gas turbine arrangement (1) according to claim 7,
**characterized in that**
for the evaporation or superheating of water, a further heat exchange device (18) for the heat transfer between the exhaust gas and the water circuit (40) is present.

9. The gas turbine arrangement (1) according to one of the preceding claims,
**characterized in that**
a recuperation device (16) is arranged downstream of the turbine device (14), in particular without the interposition of a further component.

10. The gas turbine arrangement (1) according to one of the preceding claims,
**characterized in that**
a further turbine device (26) is arranged on the exhaust gas side (34) downstream of the heat exchange device (22) of the heat pump arrangement.

11. The gas turbine arrangement (1) according to one of the preceding claims, in particular according to claim 10,
**characterized in that**
a water separator (28) is arranged on the exhaust gas side (34) downstream of the heat exchange device (22), for example downstream of the further turbine device (26).

12. The gas turbine arrangement (1) according to one of the preceding claims,
**characterized in that**
a cooling device (24) is arranged on the exhaust gas side (34) downstream of the heat exchange device (22) of the heat pump arrangement, wherein the exhaust gas can be or is cooled in particular by means of exhaust gas recirculated through the exhaust gas recirculation line (36) and/or water circulated in the water circuit (40).

13. The gas turbine arrangement (1) according to one of the preceding claims,
**characterized in that**
a compressor device of the heat pump arrangement is coupled to the shaft for transferring mechanical energy from the turbine device (26).

14. A method for operating a gas turbine arrangement (1) according to one of the preceding claims, with which oxidizer and fuel are fed to the combustion chamber (12) by the fresh gas side (30) for combustion while generating exhaust gas, wherein oxidizer and/or exhaust gas are compressed in the compressor device (10), and exhaust gas is expanded on the exhaust gas side (34) via the turbine device (14) with decoupling of energy,
**characterized in that**
energy contained in the exhaust gas within the gas turbine arrangement (1) is transferred to the heat pump arrangement.

## Revendications

1. Agencement de turbine à gaz (1) comportant
une chambre de combustion (12) pour la combustion de comburant et de carburant afin de produire du gaz d'échappement,
un côté de gaz frais (30) comportant des moyens formant conduit en amont de la chambre de combustion (12) permettant de conduire du comburant et/ou du carburant vers la chambre de combustion (12), et un côté de gaz d'échappement (34) comportant des moyens formant conduit en aval de la chambre de combustion (12) permettant de conduire du gaz d'échappement loin de la chambre de combustion (12),
un dispositif compresseur (10) disposé sur le côté de gaz frais (30) pour la compression du comburant,
un dispositif turbine (14) disposé sur le côté de gaz d'échappement (34) et accouplé ou pouvant être accouplé mécaniquement au dispositif compresseur (10) à l'aide d'un arbre pour la détente du gaz d'échappement par découplage d'énergie,
un agencement de pompe à chaleur sur lequel de l'énergie contenue dans le gaz d'échappement peut être transférée, au moins un dispositif échangeur de chaleur (22) de l'agencement de pompe à chaleur étant disposé, sur le côté de gaz d'échappement (34) en aval du dispositif turbine (14), de façon à pouvoir être traversé par le gaz d'échappement, lequel dispositif échangeur de chaleur formant une source de chaleur de l'agencement de pompe à chaleur,
et comportant un conduit de recirculation de gaz d'échappement (36) pour la recirculation externe du gaz d'échappement par l'ajout d'au moins une portion du gaz d'échappement sur le côté de gaz frais (30), lequel conduit s'écarte du côté de gaz d'échappement (34) en aval du dispositif turbine (14) et débouche sur le côté de gaz frais (30), en amont du dispositif compresseur (10),
**caractérisé en ce**
**que** le conduit de recirculation de gaz d'échappement (36) en aval du dispositif échangeur de chaleur (22) s'écarte de l'agencement de pompe à chaleur.

2. Agencement de turbine à gaz (1) selon la revendication 1,
**caractérisé en ce**
**que** le dispositif échangeur de chaleur (22) peut être amené ou est en liaison active avec un accumulateur de chaleur de l'agencement de pompe à chaleur, à l'aide duquel accumulateur la chaleur transmise par le gaz d'échappement peut être stockée temporairement pour être utilisée dans l'agencement de pompe à chaleur.

3. Agencement de turbine à gaz (1) selon la revendication 1 ou 2,
**caractérisé en ce**
**que** le dispositif échangeur de chaleur (22) est disposé pour le couplage thermique dans l'agencement de turbine à gaz sur le côté à basse température et/ou sur le côté à haute température de l'agencement de pompe à chaleur.

4. Agencement de turbine à gaz (1) selon l'une des revendications précédentes,
**caractérisé en ce**
**que** le dispositif échangeur de chaleur (22) présente un séparateur de condensat pour la condensation de vapeur d'eau à partir du gaz d'échappement, lequel séparateur de condensat est accouplé de préférence pour permettre l'utilisation ultérieure de l'eau à l'intérieur de l'agencement de turbine à gaz (1).

5. Agencement de turbine à gaz (1) selon l'une des revendications précédentes,
**caractérisé en ce**
**qu'**un second dispositif échangeur de chaleur (20), conçu en particulier comme échangeur d'eau chaude, est disposé en aval du dispositif turbine (14) et en amont du dispositif échangeur de chaleur (22).

6. Agencement de turbine à gaz (1) selon l'une des revendications précédentes,
**caractérisé en ce**
**qu'**un circuit d'eau (40) comportant au moins un conduit de retour (42, 44) est prévu, à l'aide duquel de l'eau condensée à partir du gaz d'échappement sur le côté de gaz d'échappement (34) peut être acheminée en aval du dispositif turbine (14), en particulier sur le côté de gaz frais (30) et/ou dans la chambre de combustion (12).

7. Agencement de turbine à gaz (1) selon la revendication 6,
**caractérisé en ce**
**que** l'eau peut être acheminée vers au moins un emplacement d'ajout (48, 49, 50, 52), comprenant un premier emplacement d'ajout (48) en amont du dispositif compresseur (10), un deuxième emplacement d'ajout (49) à l'intérieur du dispositif compresseur (10), un troisième emplacement d'ajout (50) entre le dispositif compresseur (10) et la chambre de combustion (12) et un quatrième emplacement d'ajout (52) à l'intérieur de la chambre de combustion (12).

8. Agencement de turbine à gaz (1) selon la revendication 7,
**caractérisé en ce**
**qu'**un dispositif échangeur de chaleur supplémentaire (18) est prévu pour le transfert de chaleur entre le gaz d'échappement et le circuit d'eau (40) de façon à permettre l'évaporation ou le surchauffage d'eau.

9. Agencement de turbine à gaz (1) selon l'une des revendications précédentes,
**caractérisé en ce**
**qu'**un dispositif de récupération (16) est disposé en aval du dispositif turbine (14), en particulier sans interposition d'un composant supplémentaire.

10. Agencement de turbine à gaz (1) selon l'une des revendications précédentes,
**caractérisé en ce**
**qu'**un dispositif turbine supplémentaire (26) est disposé sur le côté de gaz d'échappement (34) en aval du dispositif échangeur de chaleur (22) de l'agencement de pompe à chaleur.

11. Agencement de turbine à gaz (1) selon l'une des revendications précédentes, en particulier selon la revendication 10,
**caractérisé en ce**
**qu'**un séparateur d'eau (28) est disposé sur le côté de gaz d'échappement (34) en aval du dispositif échangeur de chaleur (22), par exemple en aval du dispositif turbine supplémentaire (26).

12. Agencement de turbine à gaz (1) selon l'une des revendications précédentes,
**caractérisé en ce**
**qu'**un dispositif de refroidissement (24) est disposé sur le côté de gaz d'échappement (34) en aval du dispositif échangeur de chaleur (22) de l'agencement de pompe à chaleur, le gaz d'échappement pouvant être refroidi ou étant refroidi en particulier à l'aide du gaz d'échappement recirculé par le conduit de recirculation de gaz d'échappement (36) et/ou de l'eau guidée dans le circuit d'eau (40).

13. Agencement de turbine à gaz (1) selon l'une des revendications précédentes,
**caractérisé en ce**
**qu'**un dispositif compresseur de l'agencement de pompe à chaleur est accouplé à l'arbre pour le transfert d'énergie mécanique du dispositif turbine (26).

14. Procédé permettant de faire fonctionner un agencement de turbine à gaz (1) selon l'une des revendications précédentes, dans lequel la chambre de combustion (12) est alimentée, à partir du côté de gaz frais (30), en comburant et en carburant pour la combustion afin de produire du gaz d'échappement, le comburant et/ou le gaz d'échappement étant comprimés dans le dispositif compresseur (10) et le gaz d'échappement étant détendu sur le côté de gaz d'échappement (34) par découplage d'énergie par l'intermédiaire du dispositif turbine (14),
**caractérisé en ce**
**que**, à l'intérieur de l'agencement de turbine à gaz (1), de l'énergie contenue dans le gaz d'échappement est transférée sur l'agencement de pompe à chaleur.
